# EUROPÄISCHE PATENTSCHRIFT

(11) **EP 1 770 417 B1**
(45) Veröffentlichungstag und Bekanntmachung des Hinweises auf die Patenterteilung: **09.04.2008**
(21) Anmeldenummer: 05021245.5
(22) Anmeldetag: 29.09.2005
(51) Int. Cl.: G02B 6/02

(54) **Optische Faser und Verfahren zu ihrer Herstellung**
Optical fibre and manufacturing method thereof
Fibre optique et procédé de sa réalisation

(43) Veröffentlichungstag der Anmeldung: 04.04.2007
(73) Patentinhaber: TRUMPF Laser GmbH + Co. KG, 78713 Schramberg (DE)
(72) Erfinder: Kumkar, Malte, 78713 Schramberg (DE); Huber, Rudolf, 78647 Trossingen (DE)
(74) Vertreter: Kohler Schmid Möbus

(56) Entgegenhaltungen:
- EP-A- 1 213 594
- US-A- 4 637 686
- US-A1- 2004 071 420
- US-A1- 2005 117 860

## Beschreibung

Die Erfindung betrifft eine optische Faser zur Übertragung von Hochleistungs-Laserstrahlung mit einem Faserkern, mit einem den Faserkern umgebenden inneren Fasermantel zur Führung der Laserstrahlung im Faserkern, mit einem den inneren Fasermantel umgebenden ersten äußeren Fasermantel, der mittels längs gerichteter gasgefüllter Kapillaren einen kleineren Brechungsindex als der innere Fasermantel aufweist, und mit einem den ersten äußeren Fasermantel umgebenden zweiten äußeren Fasermantel, wobei der erste äußere Fasermantel einen kapillarfreien Längsabschnitt aufweist.

Eine derartige optische Faser ist beispielsweise durch die US 2005/0117860 A bekannt geworden.

Optische Fasern werden in Verbindung mit Hochleistungslasern als Lichtleiter genutzt, um die Laserstrahlung vom Laser über eine Strecke zu einer Anwendung, z.B. zu einer Materialbearbeitungsvorrichtung, zu leiten. Lichtleiter (Lichtleitfasern) zur Übertragung von Laserstrahlung im Kilowatt-Leistungsbereich bestehen üblicherweise aus einem Quarzglas-Kem (Lichtleiterkem, core) und einem Quarzglas-Mantel (Lichtleitermantel, cladding), der durch geeignete Dotierung oder Mikrostrukturierung einen geringeren (effektiven) Brechungsindex aufweist als der Lichtleiterkem. Der Lichtleiterkern leitet Laserstrahlung bis zu einem maximalen Akzeptanzwinkel mithilfe der Totalreflexion. Der Lichtleitermantel dient nicht zur Lichtübertragung, sondern liefert den für die Totalreflexion erforderlichen geringeren Brechungsindex. Auf dem Quarzglas-Mantel ist zum Schutz der optischen Faser eine Schutzumhüllung aus einem flexiblen Material (z.B. Silikon, Acrylat) aufgebracht, die im Allgemeinen einen niedrigeren Brechungsindex als der Quarzglas-Mantel aufweist und die Laserstrahlung teilweise absorbiert.

Optische Fasern mit mikrostrukturiertem Quarzglas-Mantel, die auch als "photonic crystal fibers" bezeichnet werden, weisen einen Quarzglas-Mantel auf, der längliche, luftgefüllte Kapillaren enthält, um so den effektiven Brechungsindex des Quarzglas-Mantels zu senken. Die Kapillaren erstrecken sich parallel zum Faserkern. Durch die Abstände und Durchmesser der Kapillaren wird die numerische Apertur des Faserkems bestimmt: Je größer der Durchmesser der Kapillaren ist und je enger sie zueinander angeordnet sind, desto höher ist die numerische Apertur des Faserkerns. Über die numerische Apertur des Faserkerns wird die Strahlqualität der übertragenen Strahlung beeinflusst. Ein neueres Konzept für Lichtleiter zur Übertragung von Laserstrahlung hoher (Pulsspitzen-)Leistung stellen Hohlfasern dar, die anstelle eines massiven Quarzglas-Kerns einen hohlen, luftgefüllten Kern aufweisen. Bei diesen Hohlfasern ist der Kern ebenfalls von einem kapillardurchzogenen Quarzglas-Mantel umgeben.

Zur Einkopplung in die Lichtleiter-Faser wird ein Laserstrahl beispielsweise auf das Eintrittsende der Faser fokussiert. Dabei kann ein Teil der Laserstrahlung auch in den Mantelbereich der Faser gelangen. Dies tritt insbesondere bei der notwendigen gegenseitigen Justierung von Laserstrahl und optischer Faser auf. Ebenso kann Strahlungsleistung durch Rückstreuung und Reflexion vom bearbeiteten Werkstück in den Mantelbereich gelangen. Dieser in den Fasermantel gelangende Anteil der Laserstrahlung kann durch Totalreflexion auch außerhalb des Faserkerns geführt werden, wenn die Lichtleiter-Faser von einer flexiblen Schutzumhüllung umgeben ist, die einen geringeren Brechungsindex aufweist als der Mantelbereich. Wird - z.B. an Faserbiegungen oder Spleißverbindungen - die Totalreflexion des Mantelbereichs gestört, so kann Laserstrahlung aus dem Quarzglas-Mantel in die Schutzumhüllung eindringen bzw. diese durchdringen. Durch die Strahlungsabsorption in der Schutzumhüllung kann diese erhitzt und zerstört werden. Die nicht im Faserkern geführte Strahlung kann insbesondere an den Endbereichen des Lichtleiters zu Schäden führen. Zusätzlich wird die Strahlqualität der übertragenen Laserstrahlung verschlechtert, was sich auf nachfolgende Optiken und die Bearbeitungsqualität negativ auswirken kann.

Bei der aus der eingangs genannten US 2005/0117860 A bekannten optischen Faser bildet der kapillarfreie Längsabschnitt ein Seitenfenster, um Licht in den inneren Fasermantel ein- oder aus dem inneren Fasermantel auszukoppeln. Der kapillarfreie Längsabschnitt kann durch Strecken der optischen Faser hergestellt werden, wodurch die Kapillare dort kollabieren und gleichzeitig der Faserkern sich verjüngt. An diesem verjüngten Faserkernabschnitt werden sich im Faserkern ausbreitende Moden höherer Ordnung abgestreift, d.h., der verjüngte Faserkernabschnitt wirkt als Modenfilter, wobei die abgestreiften Moden höherer Ordnung sich im inneren Fasermantel ausbreiten.

Aus der US 4,637,686 ist eine optische Faser mit einem den inneren Fasermantel umgebenden äußeren Fasermantel bekannt, der auf seiner gesamten Länge Substanzen zum Streuen oder Absorbieren von sich im Fasermantel ausbreitendem Licht aufweist. Der äußere Fasermantel hat einen höheren Brechungsindex als der innere Fasermantel, so dass Licht im inneren Fasermantel nicht mithilfe von Totalreflexion geführt ist und in den äußeren Fasermantel eintritt, wo es bereits nach einer kurzen Länge an den Substanzen gestreut oder absorbiert wird.

Aus der US 2004/0071420 A ist ferner eine optische Faser bekannt, die eine oder mehrere Zonen mit ständig sich änderndem Brechungsindex aufweist, damit sich im Faserkern ausbreitendes Licht in den Fasermantel entweichen kann.

Schließlich ist aus der EP 1 213 594 A noch eine optische Faser bekannt, deren Fasermantel Streuelemente aufweist.

Demgegenüber stellt sich der vorliegenden Erfindung die Aufgabe, bei einer optischen Faser der eingangs genannten Art negative Auswirkungen durch in den Mantelbereich gelangende Laserstrahlung auf möglichst einfache Art und Weise zu vermindern, ohne die strahlungsführende Eigenschaft des Faserkems zu beeinflussen.

Die Aufgabe wird erfindungsgemäß dadurch gelöst, dass der kapillarfreie Längsabschnitt den inneren Fasermantel ringsum umgibt und dass der zweite äußere Fasermantel zumindest im Bereich des kapillarfreien Längsabschnitts Streuzentren zur Streuung der entlang des kapillarfreien Längsabschnitts aus dem inneren Fasermantel austretenden Laserstrahlung aufweist.

In einer solchen erfindungsgemäßen Lichtleiter-Faser wird in den inneren Fasermantel eingekoppelte Strahlung so lange sicher geführt, bis sie auf den kapillarfreien Längsabschnitt trifft. Dort tritt die im inneren Fasermantel geführte Strahlung in den zweiten äußeren Fasermantel über, erfährt an den Streuzentren eine Winkeländerung und wird so aus der Faser gezielt ausgekoppelt. Die strahlungsführende Eigenschaft des Faserkems bleibt entlang des kapillarfreien Längenabschnitts weitgehend unbeeinflusst.

Der Faserkern kann aus dotiertem oder undotiertem Quarzglas bestehen oder durch den gasgefüllten, insbesondere luftgefüllten Hohlraum einer Hohlfaser gebildet sein.

In einer bevorzugten Ausführungsform besteht der innere Fasermantel aus dotiertem Quarzglas, dessen Dotierung derart gewählt ist, dass der innere Fasermantel einen kleineren Brechungsindex als der Faserkern aufweist. Eine geeignete Dotierung zur Absenkung des Brechungsindex des inneren Fasermantels besteht bei Quarzglas zum Beispiel aus Fluorid-lonen.

In einer anderen bevorzugten Ausführungsform weist der innere Fasermantel mittels längs gerichteter gasgefüllter, vorzugsweise luftgefüllter Kapillaren einen kleineren Brechungsindex als der Faserkern auf. Die im ersten äußeren Fasermantel angeordneten Kapillaren haben einen größeren Durchmesser als die Kapillaren des inneren Fasermantels und sind eng benachbart zueinander angeordnet, so dass sich für den Brechungsindex des ersten äußeren Fasermantels ein ähnlicher Wert wie für Luft ergibt. Auf diese Weise wird Laserstrahlung, die in den inneren Fasermantel eingekoppelt wurde, innerhalb des inneren Fasermantels durch Totalreflexion geführt und kann gezielt an bestimmten Stellen ausgekoppelt werden.

Vorzugsweise bestehen der erste und zweite äußere Fasermantel aus Quarzglas.

Bevorzugt weist der zweite äußere Fasermantel auf seiner gesamten Länge Streuzentren auf. Alternativ können die Streuzentren sich auch nur über begrenzte Längenabschnitte des Lichtleiters erstrecken, d.h. gezielt als Auskoppelstellen in den äußeren Fasermantel eingebracht sein. Die Streuzentren können luftgefüllte Blasen oder Mikrokristalle sein und durch eine entsprechend strukturierte Preform (Quarzglas mit Blasen oder Mikrokristallen) oder durch Bestrahlung der Faser mittels ultrakurzer Laserpulse in den zweiten äußeren Fasermantel eingebracht sein. Zur Erzeugung von Gasblasen über die gesamte Länge des zweiten äußeren Fasermantels umfasst die Lichtleitfaser-Preform eine äußerste Schicht aus opakem Quarz, d.h. Quarz mit darin enthaltenen Luftblasen. Zur Erzeugung von Mikrokristalliten im zweiten äußeren Fasermantel kann bei der Herstellung des synthetischen Quarzglases für die Faser-Preform der Prozess derart gesteuert werden, dass Mikrokristallite entstehen. Beim Ziehen der Lichtleiter-Faser bleiben diese Mikrokristalle als Streuzentren erhalten. Alternativ können Nanopartikel in den Bereich der Preform eingebracht werden, der nach dem Ziehprozess den zweiten äußeren Fasermantel bildet. Vorzugsweise sind die Streuzentren nur in einem oberflächenfernen, inneren Volumen des zweiten äußeren Fasermantels vorgesehen, so dass die an den ersten äußeren Mantel angrenzende Grenzfläche und die Oberfläche des zweiten äußeren Mantels keine Störungen aufweisen. So wird die mechanische Belastbarkeit des Lichtleiters möglichst wenig beeinträchtigt. Zur Erzeugung von Streuzentren gezielt in bestimmten Längenabschnitten der bereits gezogenen Faser wird die Faser mit einem Ultrakurzpulslaser bestrahlt. Die Wellenlänge des Laserstrahls wird so gewählt, dass das Fasermaterial bis zu einer bestimmten Leistungsdichte des Strahls für den Laserstrahl weitgehend transparent ist. Wird diese Leistungsdichte im Fokus des Laserstrahls erreicht, so entsteht durch Mikroschädigung des Quarzmaterials ein Streuzentrum. Der Laserstrahl wird so auf die Lichtleitfaser gerichtet, das der Fokuspunkt des Laserstrahls im zweiten äußeren Fasermantel liegt.

Ist die Lichtleiter-Faser von einer Schutzumhüllung umgeben, die keine ausreichende Leistungstauglichkeit besitzt, so kann diese entlang des kapillarfreien Längsabschnitts entfernt werden. Der zweite äußere Fasermantel ist dann vorteilhafterweise entlang des kapillarfreien Längsabschnitts von einem Absorber umgeben. Es ist außerdem möglich, am kapillarfreien Längsabschnitt einen Sensor zur Leistungsmessung anzuordnen, um so die im inneren Fasermantel geführte Strahlungsleistung zu messen. Dies ist insbesondere bei der gegenseitigen Justierung von Laserstrahl und Lichtleiter vorteilhaft.

Die Erfindung betrifft auch ein Verfahren zum Herstellen eines wie oben ausgebildeten Hochleistungslichtleiters, indem eine optische Faser mit einem Faserkern, mit einem den Faserkern umgebenden inneren Fasermantel, mit einem den inneren Fasermantel umgebenden ersten äußeren Fasermantel, der mittels längs gerichteter gasgefüllter Kapillaren einen kleineren Brechungsindex als der innere Fasermantel aufweist, und mit einem den ersten äußeren Fasermantel umgebenden zweiten äußeren Fasermantel, der auf einem Längsabschnitt oder auf seiner gesamten Länge Streuzentren aufweist, auf einem Längsabschnitt erwärmt wird und dadurch die in diesem Längsabschnitt vorhandenen Kapillaren des ersten äußeren Fasermantels entfernt werden. Mit anderen Worten wird an den gewünschten Längsabschnitten die Kapillarstruktur des ersten äußeren Fasermantels durch Erwärmen kollabiert, ohne die Strukturen der übrigen Faserschichten wesentlich zu beeinflussen. Das Erwärmen des Lichtleiters erfolgt beispielsweise in einer Gasflamme, durch Wärmestrahlung eines widerstandsgeheizten Elements oder mithilfe eines Lasers. Kollabiert die Kapillarstruktur des ersten äußeren Fasermantels, so wird an dieser Stelle die Totalreflexion der im inneren Fasermantel geführten Strahlung aufgehoben, und die Strahlung koppelt in den zweiten äußeren Fasermantel über. Dort wird sie an den Streuzentren aus dem Lichtleiter heraus gestreut. Die Kollabierung der Kapillarstruktur des ersten äußeren Fasermantels erfolgt vorzugsweise über den gesamten Umfang des Lichtleiters.

Die Erfindung betrifft auch die Verwendung einer wie oben ausgebildeten optischen Faser zur Übertragung von Hochleistungslaserstrahlung. Dabei wird die in den inneren Fasermantel gelangende Laserstrahlung sicher im inneren Fasermantel bis zum Bereich des kapillarfreien Längsabschnitts geführt. Dort tritt die Laserstrahlung aus dem inneren Fasermantel in den zweiten äußeren Fasermantel über, wird an den Streuzentren aus dem Lichtleiter heraus gestreut und in einem den Lichtleiter umgebenden Absorber aufgefangen.

Die erfindungsgemäße optische Faser kann nicht nur als Lichtleiter zur Übertragung von Laserstrahlung vom Laser zu einer Bearbeitungsstelle genutzt, sondern auch direkt innerhalb eines Laserresonators oder eines Laserverstärkers eingesetzt werden. Dort wirkt sie als Verlustelement für höhere Lasermoden, die an den kapillarfreien Längsabschnitten der Faser gezielt ausgekoppelt werden.

Weitere Vorteile und vorteilhafte Ausgestaltungen des Gegenstands der Erfindung sind der Beschreibung, der Zeichnung und den Ansprüchen entnehmbar. Die gezeigten und beschriebenen Ausführungsform sind nicht als abschließende Aufzählung zu verstehen, sondern haben vielmehr beispielhaften Charakter für die Schilderung der Erfindung.

Es zeigen:
- Fig. 1: die erfindungsgemäße optische Faser im Bereich eines kapillarfreien Längsbereichs im Längsschnitt;
- Fig. 2: den Querschnitt der in Fig. 1 gezeigten optischen Faser; und
- Fig. 3 und 4: zwei andere Querschnittausführungen der in Fig. 1 gezeigten erfindungsgemäßen optischen Faser.

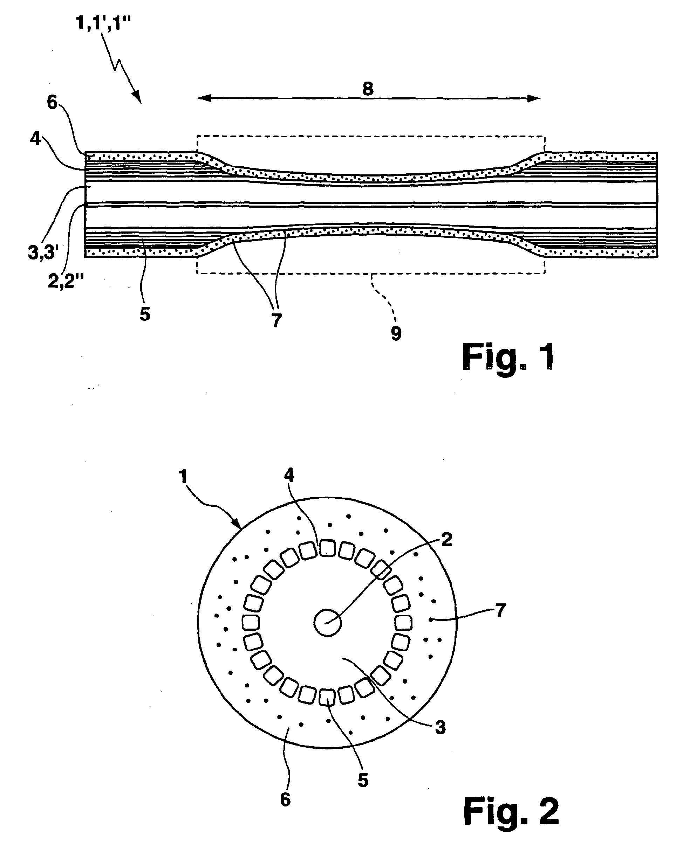

Die in **Fig. 1** und **Fig. 2** gezeigte optische Faser **1** dient zur Übertragung von Laserstrahlung hoher Leistung (>500 W). Die Faser 1 umfasst einen Faserkern **2** aus undotiertem oder dotiertem Quarzglas, einen den Faserkern 2 umgebenden inneren Fasermantel **3** aus dotiertem, insbesondere fluordotiertem Quarzglas mit kleinerem Brechungsindex als der Faserkern 2, einen den inneren Fasermantel 3 umgebenden ersten äußeren Fasermantel **4** aus Quarzglas, der mittels längs gerichteter luftgefüllter Kapillaren **5** einen kleineren Brechungsindex als der innere Fasermantel 3 aufweist, und einen den ersten äußeren Fasermantel 5 umgebenden zweiten äußeren Fasermantel **6** aus Quarzglas, der auf seiner gesamten Länge Streuzentren **7** aufweist. Der erste äußere Fasermantel 4 weist einen dünneren, kapillarfreien Längsabschnitt **8** auf, auf dem der zweite äußere Fasermantel 6 von einem Absorber **9** umgeben ist.

Der Faserkern 2 leitet Laserstrahlung bis zu einem maximalen Akzeptanzwinkel mithilfe der Totalreflexion. Der innere Fasermantel 3 dient nicht zur Lichtübertragung, sondern liefert den für die Totalreflexion erforderlichen geringeren Brechungsindex, welcher über die Dotierung entsprechend eingestellt ist. Laserstrahlung, die dennoch - z.B. beim Einkoppeln der Laserstrahlung in den Faserkern 2 - in den inneren Fasermantel 3 gelangt, wird darin mithilfe der Totalreflexion geführt, da der erste äußere Fasermantel 4 aufgrund seiner längs gerichteten luftgefüllten Kapillaren 5 einen kleineren Brechungsindex als der innere Fasermantel 3 aufweist. Die Kapillaren 5 erstrecken sich parallel zum Faserkern 2. Auf dem kapillarfreien Längsabschnitt 8 ist diese Totalreflexion für die im inneren Fasermantel 3 geführte Laserstrahlung aufgehoben, die daher entlang des kapillarfreien Längsabschnitts 8 in den zweiten äußeren Fasermantel 6 austritt, dort an den Streuzentren 7 eine Winkeländerung erfährt und aus dem Lichtleiter 1 in den Absorber 9 ausgekoppelt wird. Die strahlungsführende Eigenschaft des Faserkems 2 bleibt entlang des kapillarfreien Längenabschnitts 8 weitgehend unbeeinflusst.

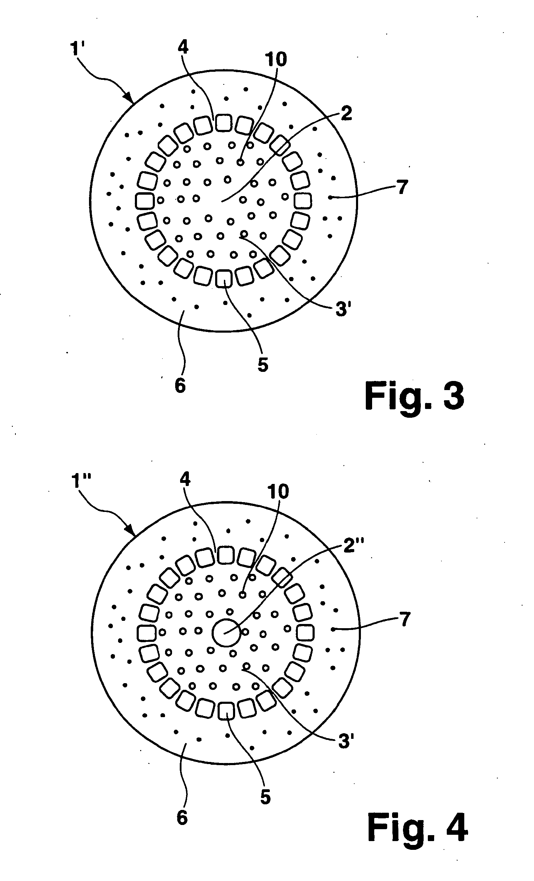

Von der optischen Faser 1 unterscheidet sich die in **Fig. 3** gezeigte Faser **1'** allein dadurch, dass hier der innere Fasermantel **3'** eine Mikrostrukturierung in Form von längs gerichteten luftgefüllten Kapillaren **10** und folglich einen Brechungsindex kleiner als der Faserkern 2 aufweist. Die Kapillaren 10 erstrecken sich parallel zum inneren Fasermantel 3'. Diese Kapillaren weisen typischerweise einen Durchmesser im Bereich von 1 µm und einen gegenseitigen Abstand auf, der den Durchmesser um etwa eine Größenordung übersteigt, so dass sich für den Faserkern eine numerische Apertur von 0,05 bis 0,2 ergibt. So kann in der optischen Faser Laserstrahlung mit einer Strahlqualität von 0,2 mm mrad bis 20 mm mrad übertragen werden. Zur Erhöhung der Stabilität der Faser 1' kann zwischen dem inneren Fasermantel 1' und dem ersten äußeren Fasermantel 5 eine weitere unstrukturierte Quarzschicht (nicht gezeigt) angeordnet sein.

Von der optischen Faser 1' unterscheidet sich die in **Fig. 4** gezeigte Faser **1"** dadurch, dass hier der Faserkern **2"** durch den Hohlraum einer luftgefüllten Hohlfaser gebildet ist.

## Patentansprüche

1. Optische Faser (1; 1'; 1") zur Übertragung von Hochleistungs-Laserstrahlung, mit einem Faserkern (2; 2"), mit einem den Faserkern (2; 2") umgebenden inneren Fasermantel (3; 3') zur Führung der Laserstrahlung im Faserkern (2; 2"), mit einem den inneren Fasermantel (3; 3') umgebenden ersten äußeren Fasermantel (4), der mittels längs gerichteter gasgefüllter Kapillaren (5) einen kleineren Brechungsindex als der innere Fasermantel (3; 3') aufweist, und mit einem den ersten äußeren Fasermantel (4) umgebenden zweiten äußeren Fasermantel (6), wobei der erste äußere Fasermantel (4) einen kapillarfreien Längsabschnitt (8) aufweist,
**dadurch gekennzeichnet,**
**dass** der kapillarfreie Längsabschnitt (8) den inneren Fasermantel (3; 3') ringsum umgibt und dass der zweite äußere Fasermantel (6) zumindest im Bereich des kapillarfreien Längsabschnitts (8) Streuzentren (7) zur Streuung der entlang des kapillarfreien Längsabschnitts (8) aus dem inneren Fasermantel (3; 3') austretenden Laserstrahlung aufweist.

2. Optische Faser nach Anspruch 1, **dadurch gekennzeichnet, dass** der Faserkern (2) aus dotiertem oder undotiertem Quarzglas besteht.

3. Optische Faser nach Anspruch 1, **dadurch gekennzeichnet, dass** der Faserkern (2") durch den inneren Hohlraum einer Hohlfaser gebildet ist.

4. Optische Faser nach einem der vorhergehenden Ansprüche, **dadurch gekennzeichnet, dass** der innere Fasermantel (3) aus dotiertem Quarzglas besteht, dessen Dotierung derart gewählt ist, dass der innere Fasermantel (3) einen kleineren Brechungsindex als der Faserkern (2; 2") aufweist.

5. Optische Faser nach einem der vorhergehenden Ansprüche, **dadurch gekennzeichnet, dass** der innere Fasermantel (3') mittels längs gerichteter gasgefüllter Kapillaren (10) zur Führung der Laserstrahlung im Lichtleiterkern (2, 2") ausgebildet ist.

6. Optische Faser nach einem der vorhergehenden Ansprüche, **dadurch gekennzeichnet, dass** der erste äußere Fasermantel (4) aus Quarzglas besteht.

7. Optische Faser nach einem der vorhergehenden Ansprüche, **dadurch gekennzeichnet, dass** der zweite äußere Fasermantel (6) aus Quarzglas besteht.

8. Optische Faser nach einem der vorhergehenden Ansprüche, **dadurch gekennzeichnet, dass** der zweite äußere Fasermantel (6) auf seiner gesamten Länge Streuzentren (7) aufweist.

9. Optische Faser nach einem der vorhergehenden Ansprüche, **dadurch gekennzeichnet, dass** die Streuzentren (7) im zweiten äußeren Fasermantel (6) nur in einem grenzflächenfernen inneren Volumen des zweiten äußeren Fasermantels (6) angeordnet sind.

10. Optische Faser nach einem der vorhergehenden Ansprüche, **dadurch gekennzeichnet, dass** der zweite äußere Fasermantel (6) entlang des kapillarfreien Längsabschnitts (8) von einem Absorber (9) umgeben ist.

11. Verfahren zum Herstellen einer optischen Faser (1; 1'; 1") nach einem der vorhergehenden Ansprüche, wobei eine Faser mit einem Faserkern (2; 2"), mit einem den Faserkern (2; 2") umgebenden inneren Fasermantel (3; 3'), mit einem den inneren Fasermantel (3; 3') umgebenden ersten äußeren Fasermantel (4), der mittels längs gerichteter gasgefüllter Kapillaren (5) einen kleineren Brechungsindex als der innere Fasermantel (3; 3') aufweist, und mit einem den ersten äußeren Fasermantel (4) umgebenden zweiten äußeren Fasermantel (6), der auf einem Längsabschnitt (8) oder auf seiner gesamten Länge Streuzentren (7) aufweist, auf einem Längsabschnitt (8) erwärmt wird und **dadurch** die in diesem Längsabschnitt (8) vorhandenen Kapillaren (5) des ersten äußeren Fasermantels (4) entfernt werden.

12. Verwendung einer optischen Faser (1; 1'; 1") nach einem der Ansprüche 1 bis 9 zur Übertragung von Hochleistungslaserstrahlung, wobei die im inneren Fasermantel (3, 3') geführte Laserstrahlung im Bereich des kapillarfreien Längsabschnitts (8) aus dem inneren Fasermantel (3, 3') in den zweiten äußeren Fasermantel (6) übertritt, dort an den Streuzentren (7) gestreut wird, aus der optischen Faser (1; 1'; 1") austritt, und in einem die Faser (1; 1'; 1") umgebenden Absorber (9) aufgefangen wird.

13. Verwendung einer optischen Faser (1; 1'; 1") nach einem der Ansprüche 1 bis 9 als Verlustelement zur Auskopplung von höheren Lasermoden in einem Laserresonator oder Laserverstärker.

## Claims

1. Optical fibre (1; 1'; 1") for the transmission of high-power laser radiation, having a fibre core (2; 2"), having an inner fibre cladding (3; 3'), which surrounds the fibre core (2; 2"), for guiding the laser radiation in the fibre core (2; 2"), having a first outer fibre cladding (4) which surrounds the inner fibre cladding (3; 3") and which by means of longitudinally oriented gas-filled capillaries (5) has a smaller refractive index than that of the inner fibre cladding (3; 3'), and having a second outer fibre cladding (6) which surrounds the first outer fibre cladding (4), wherein the first outer fibre cladding (4) has a capillary-free longitudinal portion (8),
**characterised in that**
the capillary-free longitudinal portion (8) surrounds the inner fibre cladding (3; 3') all round and the second outer fibre cladding (6) has, at least in the region of the capillary-free longitudinal portion (8), dispersion centres (7) for dispersing the laser radiation leaving the inner fibre cladding (3; 3') along the capillary-free longitudinal portion (8).

2. Optical fibre according to claim 1, **characterised in that** the fibre core (2) consists of doped or undoped quartz glass.

3. Optical fibre according to claim 1, **characterised in that** the fibre core (2") is formed by the internal cavity of a hollow fibre.

4. Optical fibre according to any one of the preceding claims, **characterised in that** the inner fibre cladding (3) consists of doped quartz glass the doping of which is selected such that the inner fibre cladding (3) has a smaller refractive index than that of the fibre core (2; 2").

5. Optical fibre according to any one of the preceding claims, **characterised in that** the inner fibre cladding (3') is formed by means of longitudinally oriented gas-filled capillaries (10) for guiding the laser radiation in the light-guide core (2, 2").

6. Optical fibre according to any one of the preceding claims, **characterised in that** the first outer fibre cladding (4) consists of quartz glass.

7. Optical fibre according to any one of the preceding claims, **characterised in that** the second outer fibre cladding (6) consists of quartz glass.

8. Optical fibre according to any one of the preceding claims, **characterised in that** the second outer fibre cladding (6) has dispersion centres (7) over its entire length.

9. Optical fibre according to any one of the preceding claims, **characterised in that** the dispersion centres (7) in the second outer fibre cladding (6) are disposed only in an interior volume of the second outer fibre cladding (6), remote from the boundary surface.

10. Optical fibre according to any one of the preceding claims, **characterised in that** the second outer fibre cladding (6) is surrounded by an absorber (9) along the capillary-free longitudinal portion (8).

11. Method for the production of an optical fibre (1; 1'; 1") according to any one of the preceding claims, wherein a fibre having a fibre core (2; 2"), having an inner fibre cladding (3; 3') which surrounds the fibre core (2; 2"), having a first outer fibre cladding (4) which surrounds the inner fibre cladding (3; 3") and which by means of longitudinally oriented gas-filled capillaries (5) has a smaller refractive index than that of the inner fibre cladding (3; 3'), and having a second outer fibre cladding (6) which surrounds the first outer fibre cladding (4) and which has dispersion centres (7) over a longitudinal portion (8) or over its entire length, is heated over a longitudinal portion (8), thereby removing the capillaries (5) of the first outer fibre cladding (4) that are present in that longitudinal portion (8).

12. Use of an optical fibre (1; 1'; 1") according to any one of claims 1 to 9 for the transmission of high-power laser radiation, wherein the laser radiation guided in the inner fibre cladding (3, 3") passes in the region of the capillary-free longitudinal portion (8) out of the inner fibre cladding (3, 3") and into the second outer fibre cladding (6), is dispersed there at the dispersion centres (7), leaves the optical fibre (1; 1'; 1") and is absorbed in an absorber (9) surrounding the fibre (1; 1'; 1").

13. Use of an optical fibre (1; 1'; 1") according to any one of claims 1 to 9 as a loss element for coupling out relatively high laser modes in a laser resonator or laser amplifier.

## Revendications

1. Fibre optique (1 ; 1' ; 1") pour la transmission d'un rayonnement laser de grande ou haute puissance, avec un coeur ou noyau de fibre (2; 2"), avec une gaine de fibre interne (3 ; 3') entourant le coeur ou noyau de fibre (2 ; 2") pour guider le rayonnement laser dans le coeur ou noyau de fibre (2 ; 2"), avec une première gaine de fibre externe (4) entourant la gaine de fibre interne (3 ; 3'), qui, au moyen de capillaires (5) remplis de gaz orientés longitudinalement, présente un plus petit indice de réfraction que la gaine de fibre interne (3 ; 3'), et avec une seconde gaine de fibre externe (6) entourant la première gaine de fibre externe (4), la première gaine de fibre externe (4) présentant une portion longitudinale (8) sans capillaires,
**caractérisée en ce que** la portion longitudinale (8) sans capillaires entoure entièrement la gaine de fibre interne (3 ; 3') et que la seconde gaine de fibre externe (6) présente, au moins au niveau de la portion longitudinale (8) sans capillaires, des centres de diffusion (7) pour diffuser le rayonnement laser sortant de la gaine de fibre interne (3 ; 3') le long de la portion longitudinale (8) sans capillaires.

2. Fibre optique selon la revendication 1, **caractérisée en ce que** le coeur ou noyau de fibre (2) est en verre de quartz dopé ou non dopé.

3. Fibre optique selon la revendication 1, **caractérisée en ce que** le coeur ou noyau de fibre (2") est formé par la cavité interne d'une fibre creuse.

4. Fibre optique selon l'une des revendications précédentes, **caractérisée en ce que** la gaine de fibre interne (3) est en verre de quartz dopé dont le dopage est choisi de manière que la gaine de fibre interne (3) présente un plus petit indice de réfraction que le coeur de fibre (2 ; 2").

5. Fibre optique selon l'une des revendications précédentes, **caractérisée en ce que** la gaine de fibre interne (3') est réalisée au moyen de capillaires (10) remplis de gaz orientés longitudinalement pour guider le rayonnement laser dans le coeur de fibre (2, 2").

6. Fibre optique selon l'une des revendications précédentes, **caractérisée en ce que** la première gaine de fibre externe (4) est en verre de quartz.

7. Fibre optique selon l'une des revendications précédentes, **caractérisée en ce que** la seconde gaine de fibre externe (6) est en verre de quartz.

8. Fibre optique selon l'une des revendications précédentes, **caractérisée en ce que** la seconde gaine de fibre externe (6) présente des centres de diffusion ou d'éparpillement (7) sur toute sa longueur.

9. Fibre optique s elon l'une des revendications précédentes, **caractérisée en ce que** les centres de diffusion ou d'éparpillement (7) dans la seconde gaine de fibre externe (6) ne sont disposés que dans un volume intérieur éloigné de la surface limite de la seconde gaine de fibre externe (6).

10. Fibre optique selon l'une des revendications précédentes, **caractérisée en ce que** la seconde gaine de fibre externe (6) est entourée par un absorbeur (9) le long de la portion longitudinale (8) sans capillaires.

11. Procédé pour fabriquer une fibre optique (1 ; 1' ; 1") selon l'une des revendications précédentes, dans lequel une fibre avec un coeur ou noyau de fibre (2 ; 2"), avec une gaine de fibre interne (3 ; 3') entourant le coeur ou noyau de fibre (2 ; 2"), avec une première gaine de fibre externe (4) entourant la gaine de fibre interne (3 ; 3'), qui, au moyen de capillaires (5) remplis de gaz orientés longitudinalement, présente un plus petit indice de réfraction que la gaine de fibre interne (3 ; 3'), et avec une seconde gaine de fibre externe (6) entourant la première gaine de fibre externe (4), qui présente des centres de diffusion ou d'éparpillement (7) sur une portion longitudinale (8) ou sur toute sa longueur, est chauffée sur une portion longitudinale (8) et de ce fait les capillaires (5) présents dans cette portion longitudinale (8) de la première gaine de fibre externe (4) sont éliminés ou enlevés.

12. Utilisation d'une fibre optique (1 ; 1' ; 1") selon l'une des revendications 1 à 9 pour transmettre un rayonnement laser de grande ou haute puissance, le rayonnement laser guidé dans la gaine de fibre interne (3, 3') passant de la gaine de fibre interne (3, 3') dans la seconde gaine de fibre externe (6) au niveau de la portion longitudinale (8) sans capillaires, étant diffusée dans celle-ci sur les centres de diffusion (7), sortant de la fibre optique (1 ; 1' ; 1") et étant capté dans un absorbeur (9) entourant la fibre (1 ; 1' ; 1").

13. Utilisation d'une fibre optique (1 ; 1' ; 1") selon l'une des revendications 1 à 9 comme élément de perte pour extraire ou découpler des modes laser d'ordre supérieur dans un résonateur laser ou dans un amplificateur laser.
